# EUROPÄISCHE PATENTSCHRIFT

(11) **EP 0 741 112 B1**
(45) Veröffentlichungstag und Bekanntmachung des Hinweises auf die Patenterteilung: **01.03.2000**
(21) Anmeldenummer: 96106714.7
(22) Anmeldetag: 27.04.1996
(51) Int. Cl.: C02F 3/20

(54) **Wasserbelüfter**
Water aerator
Aérateur d'eau

(30) Priorität: 04.05.1995 DE 29507293 U
(43) Veröffentlichungstag der Anmeldung: 06.11.1996
(73) Patentinhaber: Jäger, Arnold, D-31303 Burgdorf (DE); Jäger, Andreas, Dr., 30559 Hannover (DE); Jäger, Sebastian, 30559 Hannover (DE)
(72) Erfinder: Jäger, Arnold, D-31303 Burgdorf (DE); Jäger, Andreas, Dr., 30559 Hannover (DE); Jäger, Sebastian, 30559 Hannover (DE)
(74) Vertreter: Depmeyer, Lothar

(56) Entgegenhaltungen:
- EP-A- 0 180 039
- US-A- 3 997 634
- US-A- 4 981 623

## Beschreibung

Die Erfindung betrifft einen Wasserbelüfter mit einer steifen Halteplatte, die in der Betriebsstellung im wesentlichen waagerecht angeordnet ist, an ihrer Oberseite praktisch eben ist und die mindestens eine Durchbrechung aufweist, und mit einer elastischen Platte aus Gummi od. dgl., die auf der Halteplatte angeordnet, mit ihrem Rand dichtend an dem nach unten abgewinkelten Rand der Halteplatte befestigt und mit einer Vielzahl feiner Schlitze versehen ist, wobei die Luft zwischen der Halteplatte und der elastischen Platte einleitbar ist und die Schlitze aufweitet, und wobei der Rand der elastischen Platte den nach unten abgewinkelten Rand der Halteplatte hakenartig umschließt.

Bei bekannten Wasserbelüftern liegt der Rand der elastischen Platte außen auf dem nach unten abgewinkelten Rand der Halteplatte auf; der Rand der elastischen Platte ist dabei von eine Stahlmanschette umschlossen, um die Befestigung der elastischen Platte herbeizuführen.

Bei den Platten der eingangs genannten Art wird ein Formschluß erzielt, indem der Rand der elastischen Platte den nach unten abgewinkelten Rand der Halteplatte hakenartig erfaßt.

Der Erfindung liegt die Aufgabe zugrunde, die Wasserbelüfter der eingangs genannten Art dahingehend zu verbessern, daß sie für besonders hohe Beanspruchungen geeignet sind.

Diese Aufgabe wird erfindungsgemäß dadurch gelöst, daß an der Unterseite der Halteplatte ein steifer Ring vorzugsweise durch Schrauben befestigt ist, der den hakenförmig ausgebildeten Rand oder Teile hiervon zwischen sich und der Hauptplatte einklemmt. Der Formschluß zwischen den Rändern der Halteplatte und der elastischen Platte wird somit durch zusätzliche Maßnahmen gesichert.

Der Rand der elastischen Platte kann ferner so ausgebildet werden, daß der nach unten abgewinkelte Rand der Halteplatte völlig von dem Rand der elastischen Platte eingeschlossen ist. Bei der Verwirklichung eines solchen Formschlusses kann für den Randbereich der elastischen Platte im Vergleich zur Halteplatte ein geringerer Durchmesser gewählt werden, um die elastische Platte bei ihrer Montage geringfügig auf Zug vorzuspannen. Dadurch werden die Haltekräfte noch vergrößert, es wird ein zusätzlicher Kraftschluß herbeigeführt.

Darüber hinaus werden mit Vorteil die Randbereiche der elastischen Platte mit größerer Wandstärke ausgeführt, und zwar vorzugsweise so, daß diese Wandstärke mehrfach größer ist als diejenige des mit den Schlitzen versehenen aktiven Teils der elastischen Platte. Dadurch entsteht ein robuster Haltering an der elastischen Platte.

Ein besonderer Vorschlag geht ferner dahin, die elastische Platte oben nicht eben, sondern in einen die ebene Fläche der elastischen Platte umschließenden und abschließenden Wulst auslaufen zu lassen, der somit gegenüber der oben gelegenen ebenen, aktiven Oberfläche der elastischen Platte vorspringt. Dadurch ergibt sich nicht nur eine wünschenswerte Verstärkung und eine Griffleiste, sondern auch ein strömungstechnisch günstiger Effekt. Dieser umlaufende Wulst verhindert nämlich beim Betrieb des Belüfters, daß nachteilige Querströmungen (radiale Strömungen) entstehen können, die zu einer zu großen Einschnürung des aufsteigenden Luft-Wasser-Gemisches führen können. Es wird somit ein breiter Luftstrom aus feinen Bläschen erreicht. Es sei erwähnt, daß diese Art der Randausbildung der elastischen Platte auch bei solchen Wasserbelüftern benutzt werden kann, die eine abweichende Randverankerung ihrer elastischen Platte an der Tragplatte verwenden.

Weitere Einzelheiten der Erfindung werden anhand der Zeichnung erläutert, in der ein Ausführungsbeispiel dargestellt ist. Es zeigen:
Fig. 1 einen tellerartigen Wasserbelüfter im senkrechten Teilschnitt,
Fig. 2 einen tellerartigen Wasserbelüfter im senkrechten Teilschnitt in gegenüber Fig. 1 abgewandelter Ausführung und
Fig. 3 eine Teildraufsicht auf einen mit Schlitzen versehenen Abschnitt des Belüfters gemäß Fig. 1.

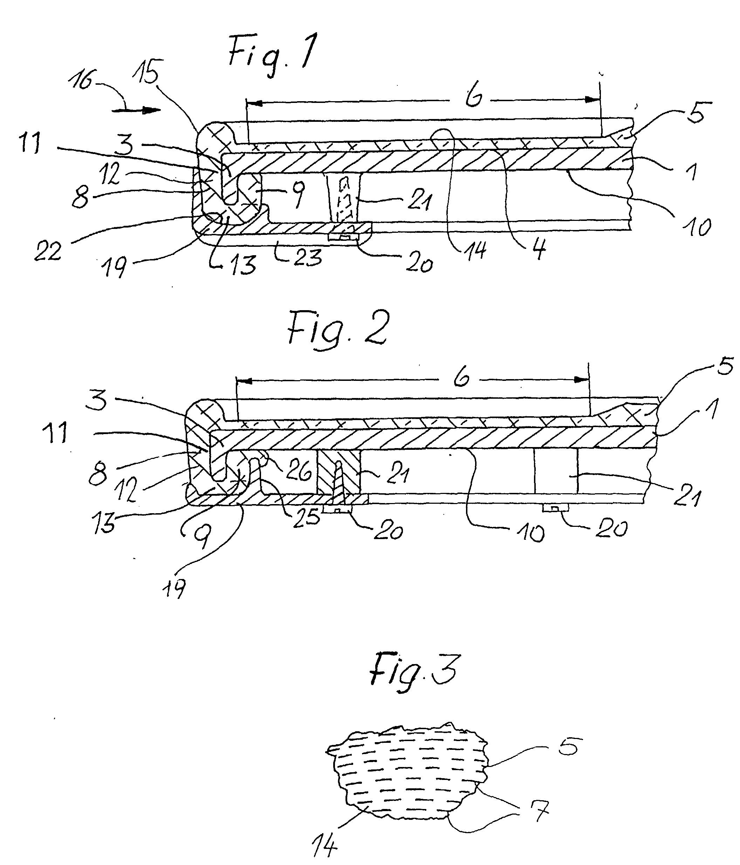

Der Belüfter ist im Wasser waagerecht angeordnet; er wird durch eine Sammelleitung gespeist, an die der Belüfter gemäß Erfindung angeschlossen ist. Der Anschluß an die Halterung erfolgt über einen unten an einer steifen Halteplatte 1 befindlichen, nicht dargestellten Stutzen. Der Stutzen ist senkrechten und zentrisch angeordneten und an ein Rohr od. dgl. angeschlossen. Die Halteplatte 1 in Form eines Kunststofformkörpers od. dgl hat einen senkrecht nach unten abgewinkelten, umlaufenden Rand 3. Auf der praktisch ebenen Oberfläche 4 der Halteplatte 1 liegt eine elastische Platte 5, die als Gummiformkörper ausgeführt und oberhalb des Stutzens verdickt ist. Über den größten Teil ihrer Ausdehnung (Kreisringabschnitt 6) ist die Platte 5 mit feinen Schlitzen 7 versehen. Mit dem Rand der Halteplatte 1 ist die Platte 5 formschlüssig verbunden, wie aus Fig. 1 erkennbar ist.

Durch Einleiten vorgespannter Luft in den Stutzen gelangt diese zwischen Oberfläche 4 und die elastische Platte 5; die feinen Schlitze 7 öffnen sich und geben dabei in das Wasser feine Luftbläschen ab. Wenn keine Luft zugeführt wird, sind die Schlitze 7 dichten geschlossen.

Die elastische Platte 5 umschließt mit einem umlaufenden Rand 8 den Rand 3 der Platte 1, wobei der nach oben geführte Schenkel 9 des Randes 8 bis an die Unterseite 10 der Platte 1 geführt ist. Damit entsteht eine Hakenverbindung, die zwar durch elastisches Verformen der Platte 5 lösbar, jedoch unter dem Druck der vorgespannten Luft fest und luftdicht ist. Um eine mechanisch feste Verankerung zu erreichen, sind sowohl der auf der äußeren Umfangsfläche 11 des Randes 3 liegende Schenkel 12 als auch der Schenkel 9 und die Schenkelverbindung 13 in ihrer Wandstärke so bemessen, daß diese etwa zwei- bis so groß sind wie die Wandstärke der Platte 5 im Kreisringabschnitt 6. Zudem ist der Durchmesser der Platte 5 (im nicht montierten Zustand) geringfügig kleiner (etwa 1 - 4 %), so daß der Rand 8 die Halteplatte 1 mit elastischer Eigenspannung umschließt. Somit ergeben sich form- und kraftschlüssige Verbindungen zwischen der Halteplatte 1 und der Platte 5.

Der am äußeren Umfang der Platte 5 gelegene Abschnitt geht nicht eben in den senkrechten Schenkel 12 über, vielmehr wird der Rand der Oberfläche 14 am äußeren Umfang von einem umlaufenden Wulst 15 begrenzt, der oben gerundet ist und eine Höhe aufweist, die ein Mehrfaches der Wandstärke im Kreisringabschnitt 6 beträgt. Dieser Wulst 15 verfestigt nicht nur den Rand 8 und er ermöglicht nicht nur eine bessere Manipulation, vielmehr bildet er auch eine gewisse Sperre für Querströmungen des Wassers in Richtung des Pfeiles 16, die beim Fehlen des Wulstes 15 zu einer Einschnürung des austretenden Bläschenstromes führen können. Damit wird dieser Strom breiter und wirkungsvoller.

An einer oder mehreren Stellen kann der Rand 8 noch mit abstehenden Laschen versehen sein (nicht dargestellt), die von Hand erfaßt werden können und Montage- bzw. Demontagearbeiten erleichtern. Diese Laschen können im Bereich der Schenkelverbindung 13 angebracht sein, insb. auch radial abstehend. Sie können eine Verrippung aufweisen, um die Griffigkeit zu steigern.

Damit der Belüfter besonders hohen Beanspruchungen standhalten kann, ist der Formschluß zwischen den beiden Rändern 3 und 8 durch zusätzliche Maßnahmen gesichert. Aus diesem Grund wird unterhalb der Halteplatte 1 ein steifer Ring 19 beispielsweise durch Schrauben 20 befestigt, die über den Umfang des Ringes 19 verteilt und in Vorsprünge 21 unten an der Halteplatte 1 eingschraubt sind. Der Ring 19 gemäß Fig. 1 hat am äußeren Umfang eine umlaufende Mulde 22 zur Aufnahme der Schenkelverbindung 13; er kann durch radiale Rippen 23 an der Unterseite versteift sein. Der Ring 19 gemäß Fig. 1 wird so gestaltet und befestigt, daß er im montierten Zustand die Schenkelverbindung 13 zwischen Ring 19 und Rand 3 einklemmen kann. Eine solche Klemmung findet auch bei dem Ring 19 gemäß Fig. 2 statt, jedoch weist dieser Ring 19 noch eine zur Halteplatte 1 gerichtete Rippe 25 auf, die auf einen radial nach innen gerichteten Rand 26 des Schenkels 9 einwirkt und diesen ebenfalls einklemmt bzw. an die Halteplatte 1 andrückt.

Der Schenkel 12 kann umlaufend oder stellenweise mit einem Vorsprung versehen sein, der eine durchgehende Bohrung aufweist (nicht dargestellt). Diese Bohrung kann zum Durchführen und Aufnehmen von Drähten, Fäden od. dgl. dienen, die untereinander oder mit besonderen Verankerungen verschnürt oder verbunden sein können.

## Patentansprüche

1. Wasserbelüfter mit einer steifen Halteplatte (1), die in der Betriebsstellung im wesentlichen waagerecht angeordnet ist, an ihrer Oberseite praktisch eben ist und die mindestens eine Durchbrechung aufweist, und mit einer elastischen Platte (5) aus Gummi od. dgl., die auf der Halteplatte (1) angeordnet, mit ihrem Rand dichtend an dem nach unten abgewinkelten Rand (3) der Halteplatte (1) befestigt und mit einer Vielzahl feiner Schlitze (7) versehen ist, wobei die Luft zwischen der Halteplatte (1) und der elastischen Platte (5) einleitbar ist und die Schlitze (7) aufweitet, und wobei der Rand (8) der elastischen Platte (5) den nach unten abgewinkelten Rand (3) der Halteplatte (1) hakenartig umschließt, dadurch gekennzeichnet, daß an der Unterseite der Halteplatte (1) ein steifer Ring (19) vorzugsweise durch Schrauben (20) befestigt ist, der den hakenförmig ausgebildeten Rand (8) oder Teile (26) hiervon zwischen sich und der Hauptplatte (1) einklemmt.

2. Belüfter nach Anspruch 1, dadurch gekennzeichnet, daß die Oberseite (14) der elastischen Platte (5) von einem in ihrem Randbereich befindlichen, umlaufendem Wulst (15) umschlossen ist.

3. Belüfter nach Anspruch 2, dadurch gekennzeichnet, daß die Höhe des oben vorzugsweise gerundeten Wulstes (15) wesentlich größer ist als die Wandstärke des mit den Schlitzen (7) versehenen Abschnittes (6) der elastischen Platte (5).

4. Belüfter nach Anspruch 2, dadurch gekennzeichnet, daß der Wulst (15) Bestandteil des umschließenden Randes (8) ist.

5. Belüfter nach Anspruch 1, dadurch gekennzeichnet, daß der Rand (8) der elastischen Platte (5) zumindest mit einer abstehenden, vorzugsweise profilierten Lasche als Handhabe versehen ist.

6. Belüfter nach Anspruch 5, dadurch gekennzeichnet, daß die Lasche am unteren Teil (in der Nähe der Schenkelverbindung 13) des Randes (8) der elastischen Platte (5) angreift bzw. dort mit diesem Rand (8) verbunden ist.

7. Belüfter nach Anspruch 1, dadurch gekennzeichnet, daß der Ring (19) am äußeren Umfang eine Mulde (22) zur Aufnahme des unteren, gebogenen Teils (Schenkelverbindung 13) des Randes (8) aufweist.

8. Belüfter nach Anspruch 1, dadurch gekennzeichnet, daß der Rand (8) einen radial nach innen abstehenden Randabschnitt (26) aufweist, der unter der Einwirkung einer Rippe (25) des Ringes (19) steht.

9. Belüfter nach Anspruch 1, dadurch gekennzeichnet, daß der Rand (8) stellenweise mit mehreren über den Umfang des Belüfters angeordneten Vorsprüngen oder mit einem umlaufenden Vorsprung versehen ist, der mit mehreren durchgehenden Löchern zur Aufnahme von Drähten, Fäden oder ähnlichen Befestigungsmitteln versehen ist.

## Claims

1. Water aerator, having a rigid retaining plate (1), which is disposed substantially horizontally when in the operative position, has a substantially flat upper surface and includes at least one opening, and said aerator having a resilient plate (5), which is formed from rubber or the like, is disposed on the retaining plate (1), is sealingly mounted by its edge on a downwardly bent edge (3) of the retaining plate (1) and is provided with a plurality of fine slits (7), the air being introducible between the retaining plate (1) and the resilient plate (5) and widening the slits (7), and the edge (8) of the resilient plate (5) circumferential the downwardly bent edge (3) of the retaining plate (1) in a hook-like manner, characterised in that a rigid ring (19) is mounted on the underside of the retaining plate (1) preferably by means of screws (20), and said ring damps the hook-like edge (8) or parts (26) thereof between it and the main plate (1).

2. Aerator according to claim 1, characterised in that the upper surface (14) of the resilient plate (5) is surrounded by a circumferential bead (15), which is situated in the edge region thereof.

3. Aerator according to claim 2, characterised in that the height of the bead (15), which is preferably rounded at its upper end, is substantially greater than the wall thickness of the portion (6) of the resilient plate (5) which is provided with the slits (7).

4. Aerator according to claim 2, characterised in that the bead (15) is a component part of the surrounding edge (8).

5. Aerator according to claim 1, characterised in that the edge (8) of the resilient plate (5) is at least provided with one protruding, preferably profiled lug serving as a handle.

6. Aerator according to claim 5, characterised in that the lug engages with the lower portion (in the vicinity of the flange connection 13) of the edge (8) of the resilient plate (5), or respectively is connected there to this edge (8).

7. Aerator according to claim 1, characterised in that the ring (19) has, on the external periphery, a depression (22) for accommodating the lower, arcuate portion (flange connection 13) of the edge (8).

8. Aerator according to claim 1, characterised in that the edge (8) has a radially inwardly protruding edge portion (26), which is subject to the action of a rib (25) of the ring (19).

9. Aerator according to claim 1, characterised in that the edge (8) is provided at various locations with a plurality of projection members, which are disposed over the periphery of the aerator, or with a circumferential projection member, which is provided with a plurality of through-holes for receiving wires, filaments or similar securing means.

## Revendications

1. Aérateur d'eau comportant une plaque (1) de maintien rigide qui est montée sensiblement à l'horizontal en la position de fonctionnement, dont la face supérieure est pratiquement plane et qui comporte au moins une découpe, et comportant une plaque (5) élastique en caoutchouc ou analogue qui est disposée sur la plaque (1) de maintien, qui est fixée par son bord de manière étanche au bord (3) coudé vers le bas de la plaque (1) de maintien et qui est munie d'une multiplicité de fines fentes (7), l'air pouvant être introduit entre la plaque (1) de maintien et la plaque (5) élastique et élargissant les fentes (7), et le bord (8) de la plaque (5) élastique entourant à la façon d'un crochet le bord (3) coudé vers le bas de la plaque (1) de maintien, caractérisé en ce qu'il est fixé à la face inférieure de la plaque (1) de maintien, de préférence par des vis (20), un anneau (19) rigide qui coince entre lui et la plaque (1) principale le bord (8) réalisé en forme de crochet ou des parties (26) de ce bord.

2. Aérateur suivant la revendication 1, caractérisé en ce que la face (14) supérieure de la plaque (5) élastique est entourée d'un renflement (15) périphérique se trouvant dans sa zone de bord.

3. Aérateur suivant la revendication 2, caractérisé en ce que la hauteur du renflement (15) de préférence arrondi en haut est sensiblement plus grande que l'épaisseur de paroi de la partie (6) de la plaque (5) élastique qui est munie des fentes (7).

4. Aérateur suivant la revendication 2, caractérisé en ce que le renflement (15) fait partie du bord (8) entourant.

5. Aérateur suivant la revendication 1, caractérisé en ce que le bord (8) de la plaque (5) élastique est muni d'au moins une patte en saillie, de préférence profilée, servant de prise.

6. Aérateur suivant la revendication 5, caractérisé en ce que la patte attaque sur la partie inférieure (à proximité de la liaison (13) de branche) du bord (8) de la plaque (5) élastique ou y est reliée à ce bord (8).

7. Aérateur suivant la revendication 1, caractérisé en ce que l'anneau (19) comporte sur son pourtour extérieur un creux (22) servant à recevoir la partie inférieure, coudée (liaison 13 de branche) du bord (8).

8. Aérateur suivant la revendication 1, caractérisé en ce que le bord (8) comporte une partie (26) de bord qui fait saillie radialement vers l'intérieur et qui est sous l'influence d'une nervure (25) de l'anneau (19).

9. Aérateur suivant la revendication 1, caractérisé en ce que le bord (8) est muni par endroits de plusieurs parties en saillie ménagées sur le pourtour de l'aérateur ou d'une partie en saillie continue qui est munie de plusieurs trous continus servant à recevoir des fils métalliques, des fils ou autres moyens de fixation similaires.
